(19) Europäisches Patentamt
European Patent Office
Office européen des brevets

(11) EP 2 090 553 A1

# (12) EUROPÄISCHE PATENTANMELDUNG

(43) Veröffentlichungstag:
**19.08.2009 Patentblatt 2009/34**

(21) Anmeldenummer: **08101598.4**

(22) Anmeldetag: **13.02.2008**

(51) Int Cl.:
***C04B 24/26*** *(2006.01)* ***C08F 220/06*** *(2006.01)*
***C08F 216/12*** *(2006.01)* ***C08F 220/08*** *(2006.01)*
***C08F 220/64*** *(2006.01)* ***C08F 220/66*** *(2006.01)*
***C08F 222/02*** *(2006.01)* ***C08F 222/04*** *(2006.01)*
***C08F 222/06*** *(2006.01)* ***C08F 222/16*** *(2006.01)*
***C08F 290/06*** *(2006.01)* ***C08L 33/02*** *(2006.01)*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Construction Research and Technology GmbH**
**83308 Trostberg (DE)**

(72) Erfinder:
- **Schwede, Christian**
  **69469, Weinheim (DE)**
- **Vierle, Mario**
  **83512 Wasserburg (DE)**
- **Mangel, Timo**
  **83308, Trostberg (DE)**
- **Albrecht, Gerhard**
  **83342, Tacherting (DE)**
- **Herzog, Volker**
  **64297, Darmstadt (DE)**
- **Arlt, Klaus**
  **82278 Traunstein (DE)**

(74) Vertreter: **Arlt, Klaus**
**BASF SE**
**Global Intellectual Property**
**GVX - C6**
**67056 Ludwigshafen (DE)**

## (54) Kontinuierlich betriebenes Verfahren zur Herstellung von Copolymeren

(57) Die Erfindung betrifft ein Verfahren zur Herstellung eines Copolymers in kontinuierlicher Betriebsweise in einer Polymerisationseinrichtung, enthaltend einen Zuführungsleitungen sowie einen Abfluss aufweisenden Polymerisationsreaktor, wobei durch die Zuführungsleitungen radikalischer Polymerisationsinitiator sowie Säuremonomer und Polyethermakromonomer als monomere Ausgangsstoffe in den Polymerisationsreaktor eingeleitet werden, in dem Polymerisationsreaktor auf -20 bis +120 ˚C temperierte Initiator, monomere Ausgangsstoffe, sowie Copolymer enthaltende Reaktionskomposition vorliegt, Copolymer enthaltende Reaktionskomposition durch den Abfluss aus dem Polymerisationsreaktor ausgeleitet wird, wobei die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät.

EP 2 090 553 A1

## Beschreibung

Die vorliegende Erfindung betrifft ein Verfahren zur Herstellung eines Copolymers, das Copolymer sowie die Verwendung des Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrid enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden. Üblicherweise erfolgt die Copolymerisation entweder in der Batch- oder in der Semi-Batch-Fahrweise.

Die EP-B-1 218 427 beschreibt ein kontinuierliches Herstellungsverfahren für besagte Copolymere, die als Fließmittel/Wasserreduzierungsmittel eine bessere Performance zeigen sollen als entsprechende Copolymere, die mit der Batch- bzw. Semi-Batch-Betriebsweise hergestellt worden sind. Gemäß dem in der EP-B-1 218 427 beschriebenen kontinuierlichen Herstellungsverfahren wird zunächst ein Monomerstrom hergestellt, welcher einerseits ein Säuremonomer und andererseits ein Polyethermakromonomer enthält. Dieser vorab erzeugte, Säuremonomer und Polyethermakromonomer enthaltende Monomerstrom wird mit einem Initiatorstrom in einer Reaktionszone polymerisiert, wobei schließlich ein Polymerstrom aus der Reaktionszone zurückgezogen wird.

Es konnte festgestellt werden, dass die zur Herstellung des Monomerstroms erfolgte Vormischung des Säuremonomers und des Polyethermakromonomers Nachteile hat. Dies begründet sich u. a. dadurch, dass in dem Monomerstrom Säuremonomer und Polyethermakromonomer miteinander unerwünschte Nebenreaktionen eingehen. Beispielsweise zeigt das Polyethermakromonomer " ethoxylierter Hydroxyvinylbutylether" zusammen mit dem Säuremonomer " Acrylsäure" unterhalb von einem pH-Wert von ca. 7 (betrifft die zugrunde liegenden Polymerisationsbedingungen) erhebliche Hydrolysenebenreaktionen. Es hat sich gezeigt, dass die Nebenreaktionen im Ergebnis die Qualität des erhaltenen Copolymerdispergiermittels deutlich verschlechtern. Weiterhin erfordert die Erzeugung des Monomerenstroms in der großtechnischen Praxis die Bereitstellung einer effektiven Vormischeinrichtung, welche Säuremonomer sowie Polyethermakromonomer bereits vor der Hinzuführung des Initiators miteinander innig vermischt.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel/Wasserreduktionsmittel, eine gute Performance zeigen.

Die Lösung dieser Aufgabe ist ein Verfahren zur Herstellung eines Copolymers in kontinuierlicher Betriebsweise in einer Polymerisationseinrichtung, enthaltend einen Zuführungsleitungen sowie einen Abfluss aufweisenden Polymerisationsreaktor, wobei durch die Zuführungsleitungen radikalischer Polymerisationsinitiator sowie Säuremonomer und Polyethermakromonomer als monomere Ausgangsstoffe in den Polymerisationsreaktor eingeleitet werden, in dem Polymerisationsreaktor auf -20 bis +120 °C temperierte Initiator, monomere Ausgangsstoffe, sowie Copolymer enthaltende Reaktionskomposition vorliegt, Copolymer enthaltende Reaktionskomposition durch den Abfluss aus dem Polymerisationsreaktor ausgeleitet wird, wobei die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel:

Maleinsäureanhydrid). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Wesentlich bei dem vorstehend beschriebenen Verfahren ist, dass das Säuremonomer erst im Polymerisationsreaktor mit dem Polyethermakromonomer in Kontakt gerät, und zwar in Anwesenheit des Polymerisationsinitiators. Dies bedeutet, dass Nebenreaktionen zwischen Säuremonomer und Polyethermakromonomer im Vorfeld der Copolymerisation vermieden werden, da das erstmalige Inkontaktbringen von Säuremonomer und Polyethermakromonomer in Anwesenheit des Polymerisationsinitiators unter Polymerisationsbedingungen erfolgt. Auf diese Weise können vielfach in erheblichem Maße unerwünschte Nebenreaktionen (z.B. Hydrolysereaktionen) zwischen Säuremonomer und Polyethermakromonomer zurückgedrängt werden. Die erhaltenen Copolymer-Fließmittel, welche mit dem erfindungsgemäßen Verfahren hergestellt werden, zeigen eine gute Performance als Fließmittel/Wasserreduktionsmittel, bzw. als Dispergiermittel für hydraulische Bindemittel.

Ein weiterer wesentlicher Vorteil des erfindungsgemäßen Verfahrens begründet sich darin, dass keine Einrichtung zur Vormischung des Säuremonomers mit dem Polyethermakromonomer erforderlich ist, deren Bereitstellung insbesondere für den großtechnischen Maßstab einen nicht unbeträchtlichen wirtschaftlichen Aufwand bedeuten würde. In dem erfindungsgemäßen Verfahren erfolgt die Durchmischung der beiden Monomere hingegen in der Reaktionskomposition, z. B. mit Hilfe einer Rührvorrichtung, mit welcher der Polymerisationsreaktor häufig ausgestattet ist.

In einer bevorzugten Ausführungsform der Erfindung wird das Säuremonomer durch Polymerisation umgesetzt und dadurch eine Struktureinheit im Copolymer erzeugt, die gemäß einer der allgemeinen Formeln (Ia), (Ib), (Ic) und/oder (Id) ist

(Ia)

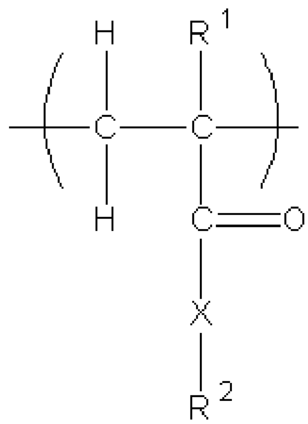

mit

$R^1$ gleich oder verschieden (d.h. innerhalb des Copolymers entweder gleich oder verschieden substituiert) sowie repräsentiert durch H und/ oder eine unverzweigte oder verzweigte $C_1$ - $C_4$ Alkylgruppe (bevorzugt H oder $CH_3$);

X gleich oder verschieden sowie repräsentiert durch NH-($C_nH_{2n}$) mit n = 1, 2, 3 oder 4 und/oder O-($C_nH_{2n}$) mit n = 1, 2, 3 oder 4 (bevorzugt NH-$C_4H_8$) und/oder durch eine nicht vorhandene Einheit (d.h., dass -X nicht vorhanden ist);

$R^2$ gleich oder verschieden sowie repräsentiert durch OH, $SO_3H$, $PO_3H_2$, O-$PO_3H_2$ und/oder para substituiertes $C_6H_4$-$SO_3H$, mit der Maßgabe, dass falls X eine nicht vorhandene Einheit ist, $R^2$ durch OH repräsentiert wird;

(Ib)

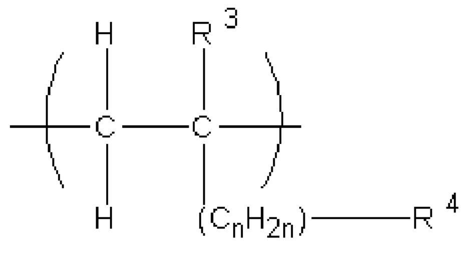

mit
$R^3$ gleich oder verschieden sowie repräsentiert durch H und/oder eine unverzweigte oder verzweigte $C_1$ - $C_4$ Alkylgruppe (bevorzugt $CH_3$);
n = 0,1,2,3 oder 4
$R^4$ gleich oder verschieden sowie repräsentiert durch $SO_3H$, $PO_3H_2$, O-$PO_3H_2$ und/oder para substituiert vorliegendes $C_6H_4$-$SO_3H$;

(Ic)

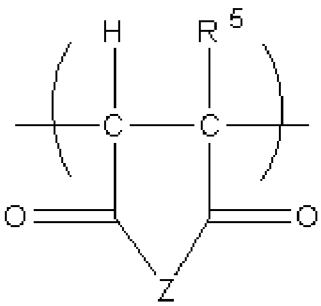

mit
$R^5$ gleich oder verschieden sowie repräsentiert durch H und/oder eine unverzweigte oder verzweigte $C_1$ - $C_4$ Alkylgruppe (bevorzugt H);
Z gleich oder verschieden sowie repräsentiert durch O und/oder NH;

(Id)

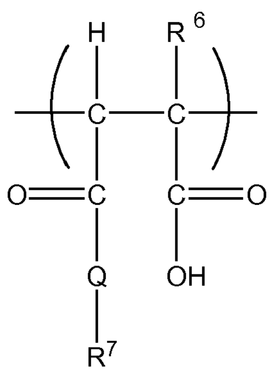

mit
$R^6$ gleich oder verschieden sowie repräsentiert durch H und/oder eine unverzweigte oder verzweigte $C_1$ - $C_4$ Alkylgruppe (bevorzugt H);
Q gleich oder verschieden sowie repräsentiert durch NH und/oder O;
$R^7$ gleich oder verschieden sowie repräsentiert durch H, $(C_nH_{2n})$-$SO_3H$ mit n = 0, 1, 2, 3 oder 4, $(C_nH_{2n})$-OH mit n = 0, 1, 2, 3 oder 4; $(C_nH_{2n})$-$PO_3H_2$ mit n = 0, 1, 2, 3 oder 4, $(C_nH_{2n})$-$OPO_3H_2$ mit n = 0, 1, 2, 3 oder 4, $(C_6H_4)$-$SO_3H$, $(C_6H_4)$-$PO_3H_2$, $(C_6H_4)$-$OPO_3H_2$ und/oder $(C_mH_{2m})_e$-O-$(A'O)_\alpha$ -$R^9$ mit m = 0, 1, 2, 3 oder 4, e = 0, 1, 2, 3 oder 4, A' = $C_{x'}H_{2x'}$ mit x' = 2, 3, 4 oder 5 (bevorzugt x' = 2) und/oder $CH_2C(C_6H_5)H$-, $\alpha$ = eine ganze Zahl von 1 bis 350 (bevorzugt $\alpha$ = 15 - 200) mit $R^9$ gleich oder verschieden sowie repräsentiert durch eine unverzweigte oder verzweigte $C_1$ - $C_4$ Alkylgruppe (bevorzugt $CH_3$).

Bezüglich $R^2$, $R^4$ und $R^7$ in den Strukturformeln Ia, Ib und Id ist zu bemerken, dass die entsprechenden Säurefunktionen, insbesondere bei Zugabe von Basen, (im Polymer) deprotoniert vorliegen können (Salzbildung).

Die vorstehend und nachstehend benutzte Ausdrucksweise" gleich oder verschieden" soll jeweils Konstanz oder Variabilität innerhalb des durch das erfindungsgemäße Verfahren erzeugten Copolymers bedeuten.

In der Praxis wird als Säuremonomer häufig Methacrylsäure, Acrylsäure, Maleinsäure, Maleinsäureanhydrid, ein Halbester der Maleinsäure oder eine Mischung aus mehreren dieser Komponenten eingesetzt.

In einer bevorzugten Ausführungsform der Erfindung wird das Polyethermakromonomer durch Polymerisation

umgesetzt und dadurch eine Struktureinheit im Copolymer erzeugt, die gemäß einer der allgemeinen Formeln (IIa), (IIb) und/oder (IIc) ist

(IIa)

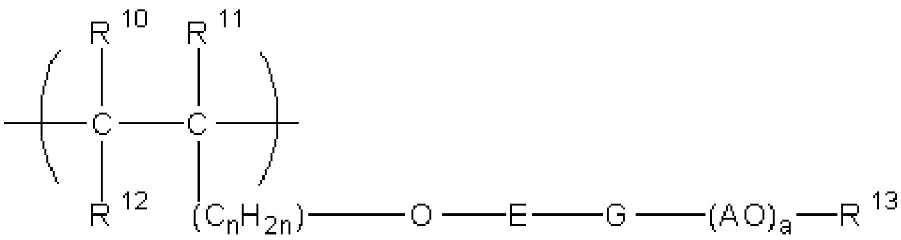

mit
$R^{10}$, $R^{11}$ sowie $R^{12}$ jeweils gleich oder verschieden und unabhängig voneinander repräsentiert durch H und/oder eine unverzweigte oder verzweigte $C_1$ - $C_4$ Alkylgruppe (bevorzugt H und/oder $CH_3$);

E gleich oder verschieden sowie repräsentiert durch eine unverzweigte oder verzweigte $C_1$ - $C_6$ Alkylengruppe ($C_1$, $C_2$, $C_3$, $C_4$, $C_5$ oder $C_6$ zwar jeweils typisch, jedoch bevorzugt $C_2$ und $C_4$), eine Cyclohexylgruppe, $CH_2$-$C_6H_{10}$, ortho, meta oder para substituiert vorliegendes $C_6H_4$ und/oder eine nicht vorhandene Einheit (d.h., dass -E nicht vorhanden ist);

G gleich oder verschieden sowie repräsentiert durch O, NH und/oder CO-NH mit der Maßgabe, dass falls E eine nicht vorhandene Einheit ist, G auch als eine nicht vorhandene Einheit vorliegt (d.h., dass -G nicht vorhanden ist);

A gleich oder verschieden sowie repräsentiert durch $C_xH_{2x}$ mit x = 2, 3, 4 und/oder 5 (bevorzugt x = 2) und/oder $CH_2CH(C_6H_5)$;
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
$R^{13}$ gleich oder verschieden sowie repräsentiert durch H, eine unverzweigte oder verzweigte $C_1$ - $C_4$ Alkylgruppe, CO-$NH_2$, und/oder $COCH_3$ (bevorzugt H, $CH_3$);

(IIb)

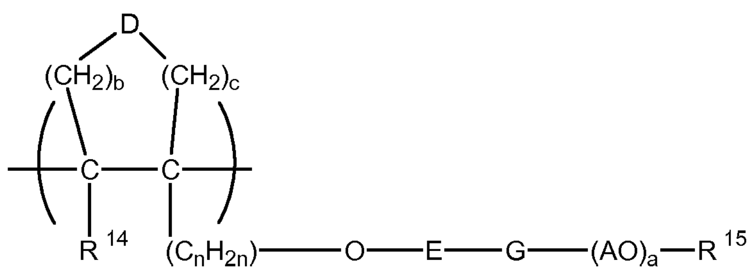

mit
$R^{14}$ gleich oder verschieden sowie repräsentiert durch H und/oder eine unverzweigte oder verzweigte $C_1$ - $C_4$ Alkylgruppe (bevorzugt H);
E gleich oder verschieden sowie repräsentiert durch eine unverzweigte oder verzweigte $C_1$ - $C_6$ Alkylengruppe (bevorzugt $C_2H_4$), eine Cyclohexylgruppe, $CH_2$-$C_6H_{10}$, ortho, meta oder para substituiert vorliegendes $C_6H_4$ und/oder durch eine nichtvorhandene Einheit (d.h. -E ist nicht vorhanden);

G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit (d.h. -G ist nicht vorhanden) vorliegt;

A gleich oder verschieden sowie repräsentiert durch $C_xH_{2x}$ mit x = 2, 3, 4 und/oder 5 (bevorzugt x = 2) und/oder $CH_2CH(C_6H_5)$;
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);

D gleich oder verschieden sowie repräsentiert durch eine nicht vorhandene Einheit (d.h. -D ist nicht vorhanden), NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
$R^{15}$ gleich oder verschieden sowie repräsentiert durch H, eine unverzweigte oder verzweigte $C_1$ - $C_4$ Alkylgruppe, CO-$NH_2$, und/oder $COCH_3$ (bevorzugt H);

(IIc)

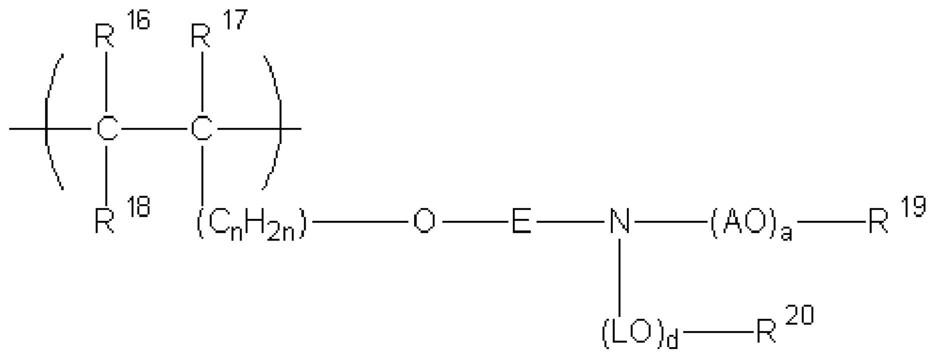

mit $R^{16}$, $R^{17}$ sowie $R^{18}$ jeweils gleich oder verschieden und unabhängig voneinander repräsentiert durch H und/oder eine unverzweigte oder verzweigte $C_1$ - $C_4$ Alkylgruppe (bevorzugt H und/oder $CH_3$);
E gleich oder verschieden sowie repräsentiert durch eine unverzweigte oder verzweigte $C_1$ - $C_6$ Alkylengruppe (bevorzugt $C_2H_4$ oder $C_4H_8$), eine Cyclohexylgruppe, $CH_2$-$C_6H_{10}$, ortho, meta oder para substituiert vorliegendes $C_6H_4$ und/oder durch eine nicht vorhandene Einheit (d.h. -E ist nicht vorhanden);
A gleich oder verschieden sowie repräsentiert durch $C_xH_{2x}$ mit x = 2, 3, 4 und/oder 5 (bevorzugt x = 2) und/oder $CH_2CH(C_6H_5)$;
n gleich oder verschieden sowie repräsentiert durch 0, 1, 2, 3, 4 und/oder 5;
L gleich oder verschieden sowie repräsentiert durch $C_xH_{2x}$ mit x = 2, 3, 4 und/oder 5 (bevorzugt x = 2) und/oder $CH_2$-$CH(C_6$-$H_5)$;
a gleich oder verschieden sowie repräsentiert durch eine ganze Zahl von 2 bis 350 (bevorzugt 10 - 200);
d gleich oder verschieden sowie repräsentiert durch eine ganze Zahl von 1 bis 350 (bevorzugt 10 - 200);
$R^{19}$ gleich oder verschieden sowie repräsentiert durch H und/oder eine unverzweigte oder verzweigte $C_1$ - $C_4$ Alkylgruppe (bevorzugt H),
**[0025]** $R^{20}$ gleich oder verschieden sowie repräsentiert durch H und/oder eine unverzweigte $C_1$ - $C_4$ Alkylgruppe (bevorzugt H).
Allgemein kann gesagt werden, dass die Poly-Alkoxyseitenketten $(AO)_a$ der Polyethermakromonomere zwar meist reine Poly-Ethoxyseitenketten sind, wobei jedoch nicht selten auch gemischte Poly-Alkoxyseitenketten, insbesondere solche, die sowohl Propoxy- als auch Ethoxy-Gruppen enthalten, vorliegen.
In der Praxis wird häufig als Polyethermakromonomer alkoxyliertes Isoprenol (alkoxyliertes 3-Methyl-3-buten-1-ol) und/oder alkoxylierter Hydroxybutylvinylether und/oder alkoxylierter (Meth)allylalkohol (Allylalkohol bevorzugt gegenüber Methallylalkohol) mit normalerweise jeweils einer arithmethisch mittleren Zahl an Oxyalkylengruppen von 4 bis 400 eingesetzt. Besonders bevorzugt ist alkoxylierter Hydroxybutylvinylether.
Neben dem Säuremonomer und dem Polyethermakromonomer können noch weitere Monomertypen zum Einsatz kommen. Dies wird dann in der Regel so in die Praxis umgesetzt, dass als monomerer Ausgangsstoff eine vinylisch ungesättigte Verbindung in den Polymerisationsreaktor eingeleitet wird, welche durch Polymerisation umgesetzt wird und dadurch eine Struktureinheit im Copolymer erzeugt, die gemäß der allgemeinen Formeln (IIIa) und/oder (IIIb) vorliegt

(IIIa)

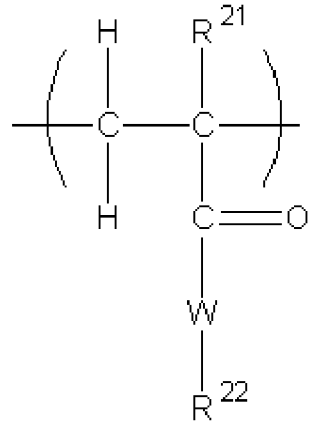

mit
$R^{21}$ gleich oder verschieden sowie repräsentiert durch H und/oder eine unverzweigte oder verzweigte $C_1$ - $C_4$ Gruppe (bevorzugt H oder $CH_3$);
W gleich oder verschieden sowie repräsentiert durch O und/oder NH;
$R^{22}$ gleich oder verschieden sowie repräsentiert durch eine verzweigte oder unverzweigte $C_1$ - $C_5$-Monohydoxyalkylgruppe ($C_1$, $C_2$, $C_3$, $C_4$ oder $C_5$ ist zwar jeweils typisch, bevorzugt ist jedoch $C_2$ und/oder $C_3$);

(IIIb)

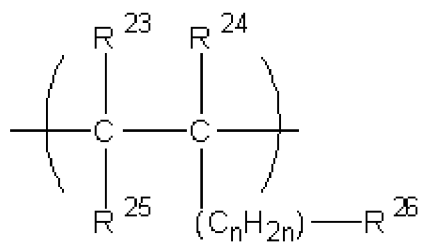

mit $R^{23}$, $R^{24}$ und $R^2$ jeweils gleich oder verschieden sowie jeweils unabhängig repräsentiert durch H und/oder eine unverzweigte oder verzweigte $C_1$ - $C_4$ Alkylgruppe (bevorzugt H und/oder $CH_3$);
n gleich oder verschieden sowie repräsentiert durch 0, 1, 2, 3 und/oder 4;
$R^{26}$ gleich oder verschieden sowie repräsentiert durch ($C_6H_5$), OH und/oder $OCOCH_3$.

Typische Monomere, welche durch Polymerisation die Struktureinheiten (IIIa) oder (IIIb) erzeugen sind beispielsweise 2-Hydroxypropylacrylat, Isoprenol oder Allylalkohol. Als weiteres typisches Monomer wäre in diesem Zusammenhang noch Hydroxybutylvinylether zu nennen.

Normalerweise werden insgesamt mindestens 45 Mol %, bevorzugt jedoch mindestens 80 Mol % aller Struktureinheiten des durch das Verfahren erzeugten Copolymers durch Polymerisation von Säuremonomer und Polyethermakromonomer erzeugt.

In einer bevorzugten Ausführungsform wird soviel Polyethermakromonomer pro Mol Säuremonomer in den Polymerisationsreaktor eingeleitet, dass sich im gebildeten Copolymer ein arithmetisch mittleres molares Verhältnis von Säuremonomerstruktureinheiten zu Polyethermakromonomerstruktureinheiten von 20 : 1 bis 1 : 1, bevorzugt von 12 : 1 bis 1 : 1 einstellt.

In der Regel wird als radikalischer Polymerisationsinitiator ein Redoxinitiator eingesetzt. Meist wird dann als Redoxinitiator das System $H_2O_2/FeSO_4$ gewählt, bevorzugt zusammen mit einem Reduktionsmittel. Als Reduktionsmittel kommen in Betracht Natriumsulfit, das Dinatriumsalz der 2-Hydroxy-2-sulfinatoessigsäure, das Dinatriumsalz der 2-Hydroxy-2-sulfonatoessigsäure,

Natriumhydroxymethansulfinat, Ascorbinsäure, Iso-Ascorbinsäure oder Mischungen davon. Als das Redox-Initiatorsystem kommen auch andere Systeme in Frage, z.B. solche die auf t-Butylhydroperoxid, Ammonium- oder Kaliumperoxidisulfat basieren.

In einer weniger bevorzugten Ausführungsform werden Initiatorkomponenten, z.B. $H_2O_2$, und das Polyethermakromonomer in vorgemischter Form in einem Strom in den Polymerisationsreaktor eingeleitet.

Grundsätzlich können jedoch als Initiatoren sämtliche unter Polymerisationsbedingungen in Radikale zerfallende Verbindungen wie z.B. Peroxide, Hydroperoxide, Persulfate, Azoverbindungen und Perphosphate eingesetzt werden. In Kombination der Radikalbildner mit geeigneten Reduktionsmitteln erhält man bekannte Redoxsysteme bzw. Redoxkatalysatoren. Geeignete Reduktionsmittel sind beispielsweise Natriumsulfit, das Dinatriumsalz der 2-Hydroxy-2-sulfonatoessigsäure, das Dinatriumsalz der 2-Hydroxy-2-sulfinatoessigsäure, Natriumhydroxymethansulfinat, Ascorbinsäure, Iso-Ascorbinsäure, Amine wie Diethanolamin oder Triethanolamin, Hydroxylamin oder Mischungen davon. Zweckmäßigerweise setzt man bei Verwendung von Redoxsystemen bzw. Katalysatoren zusätzlich wasserlösliche Salze von Übergangsmetallen wie Eisen, Kobalt, Nickel oder Silber ein, bevorzugt werden hierbei Eisensalze verwendet. Meist wird ein Kettenregler, welcher bevorzugt in gelöster Form vorliegt, in den Polymerisationsreaktor eingeleitet.

Die monomeren Ausgangsstoffe und/oder der Initiator können in Form ihrer wässrigen Lösungen in den Polymerisationsreaktor eingeleitet werden.

Bevorzugt liegt der Polymerisationsreaktor als kontinuierlich betriebener Rührkessel vor.

Häufig weist die Polymerisationseinrichtung noch mindestens einen dem Polymerisationsreaktor nachgeschalteten, kontinuierlich betriebenen Reaktor auf, in welchem über den Abfluss des Polymerisationsreaktors die Copolymer enthaltende Reaktionskomposition eingeleitet wird. In den nachgeschalteten Reaktor können dann monomere Ausgangsstoffe und/oder Initiatorkomponenten eingeleitet werden.

Die Erfindung betrifft außerdem Copolymer, welches gemäß dem vorstehend beschriebenen Verfahren herstellbar ist. Das erfindungsgemäße Copolymer liegt normalerweise als Kammpolymer vor.

Weiterhin betrifft die Erfindung die Verwendung des erfindungsgemäßen Copolymers als Dispergiermittel für hydraulische Bindemittel.

Im Folgenden soll die Erfindung anhand von Ausführungsbeispielen näher beschrieben werden.
Zur Veranschaulichung der Ausführungsbeispiele zeigt die Zeichnung in Fig. 1 einen schematischen Anlagenaufbau zur Durchführung des erfindungsgemäßen Verfahrens, sowie in Fig. 2 ein entsprechendes Vergleichsschema zur Durchführung eines Verfahrens, welches nicht gemäß der Erfindung ist.

Beschreibung der eingesetzten Polymerisationseinrichtung:

Ein Beispiel einer typischen im Labormaßstab ausgelegten Produktionsanlage für die kontinuierliche Produktion der beschriebenen Copolymere ist in Fig. 1 schematisch dargestellt. Die Reaktionseinheit besteht aus zwei doppelwandigen Reaktoren (1 und 1a), beide ausgestattet mit Rührvorrichtungen (2 und 2a) und Motoren (3 und 3a). Das Gesamtvolumen der Reaktoren beträgt 0,657 $dm^3$ (Reaktor 1) und 0,311 $dm^3$ (Reaktor 1a). Die Reaktoren sind mit einer Rohrleitung verbunden (4).

Reaktor (1) ist durch Zuleitungen mit den Vorratsgefäßen der Reaktanden verbunden. Mittels zwischengeschalteter Pumpen kann ein definierter Stoffstrom eingestellt werden. Der Anlagenaufbau enthält die folgenden Vorratsgefäße (Verschließbare Glasbehälter mit Magnetrührvorrichtung): (5) für die Vinyletherkomponente (das Polyethermakromonomer); (6) für eine wässrige Basenlösung zur Einstellung des in der Reaktion benötigten pH-Wertes, (7) für $H_2O$, (8) für das Säuremonomer 2-Propensäure (Acrylsäure), (9) für die Kettenübertragungskomponente, (10) für die erste Initiatorkomponente, (11) für die zweite Initiatorkomponente und (12) für die dritte Initiatorkomponente. Die Zuleitungsrohre der Vorratsgefäße (5.1, 6.1, 7.1, 8.1, 9.1, 10.1, 11.1 und 12.1) führen durch den Reaktordeckel in den Reaktor und das Reaktionsmedium, wobei die Eindringtiefe in das Reaktionsmedium so gewählt ist, dass die Dosierung in eine Zone mit hoher Durchmischungseffizienz erfolgt. Zur Gewährleistung der Verhinderung einer Vorvermischung von Säuremonomer und Polyethermakromonomer wird ein maximaler Abstand der Zuleitungen 5.1 und 8.1 am Reaktor gewählt. Reaktor (1a) ist ebenfalls durch Zuleitungen (13.1 und 14.1) mit den Vorratsgefäßen (13) und (14) (Volumen jeweils 5,00 $dm^3$) für Reaktanden verbunden. Mittels ebenfalls zwischengeschalteter Pumpen kann ein definierter Stoffstrom eingestellt werden. Weiterhin enthält der Anlagenaufbau folgende Komponenten: (13) für $H_2O$ oder eine wässrige Basenlösung und (14) für die zweite Initiatorkomponente. Reaktor 1 und 1a enthalten jeweils noch eine Temperatursonde (15 und 15a).

Herstellungsbeispiele:

Beispiel 1: Gemäß Erfindung: Herstellung eines Polymers ohne Vormischung der Monomerkomponenten

Die Apparatur wird zu Beginn mit Wasser gespült und die Reaktoren 1 und 1 a mit Wasser geflutet. In Vorratsgefäß 5 werden 4,478 kg $H_2O$ vorgelegt und unter Rühren 0,022 kg einer wässrigen KOH-Lösung (20 Gew.-%) sowie

als Polyethermakromonomer 4,500 kg Vinyloxybutylpoly(ethylenoxid) mit einer zahlenmittleren Molmasse von 6000 $g \cdot mol^{-1}$ zugegeben. Die Lösung wird bis zur vollständigen Auflösung des Vinyloxybutylpoly(ethylenoxid)s gerührt. Vorratsgefäß 6 wird mit 0,100 kg einer wässrigen KOH-Lösung (20 Gew.-%) befüllt, Vorratsgefäß 7 mit 0,100 kg entionisiertem Wasser. In Vorratsgefäß 8 werden 0,420 kg $H_2O$ vorgelegt und unter Rühren 0,280 kg des Säuremonomers 2-Propensäure (Acrylsäure) eingetragen. Vorratsgefäß 9 wird mit 0,500 kg einer 8%-igen Lösung von 3-MPS (3-Mercaptopropansäure) befüllt, Vorratsgefäß 10 mit einer 5 %igen $H_2O_2$ Lösung. In Vorratsgefäß 11 werden 0,235 kg Wasser vorgelegt, unter Rühren 0,015 kg Brüggolit® FF6 M (Brüggolit® FF6 M ist ein Gemisch aus Natriumsulfit, Dinatriumsalz der 2-Hydroxy-2-sulfinatoessigsäure und Dinatriumsalz der 2-Hydroxy-2-sulfinatoessigsäure, beziehbar bei der BrüggemannChemical L. Brüggemann KG) zugegeben und bis zur vollständigen Auflösung gerührt. Vorratsgefäß 12 wird mit 0,150 kg einer wässrigen Lösung von $FeSO_4 \cdot 7H_2O$ (1,4 Gew.-%) befüllt. Vorratsgefäß 13 wird mit 0,100 kg entionisiertem Wasser, Vorratsgefäß 14 mit 0,150 kg einer Brüggolit® FF6 M-Lösung befüllt, die in analoger Weise zu der in Vorratsgefäß 11 eingefüllten hergestellt wurde.

Zu Beginn der Reaktion werden die beiden Rührer sowie alle Pumpen gestartet und Kühlwassermanteltemperatur so eingestellt, dass die Temperatur des Reaktionsmediums konstant 15 °C beträgt. Die Stoffströme der Reaktanden aus Vorratsgefäß 5, 8 und 9 werden entsprechend eingestellt, dass die Summe der mittleren Verweilzeiten 20 Minuten in Reaktor 1 und 10 Minuten in Reaktor 1a betragen. Die weiteren Stoffströme werden wie folgt eingestellt: KOH-Lösung (Vorratsgefäß 6): 0,008 $kg \cdot h^{-1}$; $H_2O$ (Vorratsgefäß 7): 0,006 $kg \cdot h^{-1}$; Initiatorkomponenten 10, 11 und 12: 0,030 $kg \cdot h^{-1}$; 0,036 $kg \cdot h^{-1}$ und 0,020 $kg \cdot h^{-1}$. Als Stoffströme der Reaktanden in Reaktor 1a werden eingestellt: $H_2O$ (Vorratsgefäß 13): 0,006 $kg \cdot h^{-1}$ und Initiatorkomponente 2 (Vorratsgefäß 14): 0,006 $kg \cdot h^{-1}$. Es ist gewährleistet, dass die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät. Nach Einstellen der Stoffströme wird in Zeitabständen, die der Summe der mittleren Verweilzeiten der Reaktoren entsprechen jeweils eine Probe entnommen und per Größenausschlusschromatographie analysiert. Der stationäre Zustand des Versuchs ist dann erreicht, wenn sich die Form des Gelchromatographieelutionsdiagramms (GPC-Diagramms) und die ermittelten Molmassenmittelwerte in Abhängigkeit von der Zeit nicht mehr ändern. Nach Erreichen des stationären Zustands wird eine für die Versuchsbedingungen repräsentative Probe entnommen (Polymer 1) und per Größenausschlusschromatographie analysiert und daraus die Molmassenverteilung und deren Mittelwerte sowie der Umsatz ermittelt. Am Ende der Reaktion werden alle Stoffströme auf Null gestellt und die Apparatur mit Wasser gespült.

Vergleichsbeispiel 1: Herstellung eines Polymers unter Vormischung der Monomerkomponenten in einem Vorratsgefäß sowie Dosierung aus diesem Vorratsgefäß

In Vorratsgefäß 5 wird zunächst die wie in Beispiel 1 beschriebene Vinyloxybutylenpoly(ethylenglykol)-Lösung (Vinyloxybutylpoly(ethylenoxid)-Lösung) hergestellt und anschließend unter weiterem Rühren die in Beispiel 1 beschriebene Menge an Wasser und 2-Propensäure in Vorratsgefäß 5 eingemischt. Die Stoffströme werden analog zu den in Beispiel 1 beschrieben eingestellt. Die Versuchsdurchführung erfolgt analog Beispiel 1. Nach Erreichen des stationären Zustands des Versuchs durch ein, wie in Beispiel 1 beschriebenes Vorgehen, wird eine Probe entnommen (Polymer 2) und die Molmassenverteilung, deren Mittelwerte sowie der Umsatz mittels Größenausschlusschromatographie bestimmt.

Vergleichsbeispiel 2: Herstellung eines Polymers unter Vormischung der Monomerkomponenten mittels einer Vormischeinheit (temperiert auf 25 °C)

Die Polymerisationsanlage im Labormaßstab wird durch den Einbau einer Vormischeinheit modifiziert (Fig. 2). Die Vormischeinheit besteht aus einem mittels Rührwerk durchmischten temperierbaren Behälter (mit einem Volumen von 0,55 $dm^3$), der mit zwei Zuleitungen für die zu mischenden wässerigen Lösungen und einer Ableitung für die gemischte Lösung ausgestattet ist. Hierzu wird die Vormischeinheit in die Zuleitung 5.1 eingebaut und zusätzlich die Zuleitung 8.1 an die Vormischeinheit angeschlossen, so dass die Monomerkomponenten miteinander vermischt werden und mittels einer Zuleitung gemeinsam in den Reaktor dosiert werden.

Die Stoffströme werden analog zu denen in Beispiel 1 beschrieben eingestellt. Die Versuchsdurchführung erfolgt analog Beispiel 1, wobei zur Simulation der Raumtemperatur eine Temperatur im Vormischer von 25 °C eingestellt wird. Nach Erreichen des stationären Zustands des Versuchs durch ein, wie in Beispiel 1 beschriebenes Vorgehen, wird eine Probe entnommen (Polymer 3) und die Molmassenverteilung, deren Mittelwerte sowie der Umsatz mittels Größenausschlusschromatographie bestimmt.

Vergleichsbeispiel 3: Herstellung eines Polymers unter Vormischung der Monomerkomponenten mittels einer Vormischeinheit (temperiert auf 35 °C)

Anlagenaufbau und Durchführung der Polymerisation analog zu Vergleichsbeispiel 2, wobei die Vormischeinheit auf 35 °C temperiert wurde. Nach Erreichen des stationären Zustands des Versuchs durch ein, wie in Beispiel 1 beschriebenes Vorgehen, wird eine Probe entnommen (Polymer 4) und die Molmassenverteilung, deren Mittelwerte sowie der Umsatz mittels Größenausschlusschromatographie bestimmt.

Analyse der Copolymere aus Beispiel 1 und den Vergleichsbeispielen 1 bis 3:

Die Polymere aus Beispiel 1 und den Vergleichsbeispielen 1 bis 3 werden mittels Größenausschlusschromatographie bezüglich mittlere Molmasse und Umsatz analysiert (Säulenkombination: Suprema 1000 und Suprema 30 der Firma PSS, Mainz; Eluent: wässerige Lösung aus $Na_2HPO_4$ (0,03 mol/l) und 0,5 g/l Natriumazid; Injektionsvolumen 50 µl; Flussrate 0,8 ml/min). Die Kalibration zur Bestimmung der mittleren Molmasse erfolgte mit linearen Poly(ethylenoxid)standards. Als Maß für den Umsatz wird der Peak des Copolymers auf eine relative Höhe von 1 normiert und die Höhe des Peaks des nicht umgesetzten Makromomers/PEG-haltigen Oligomers als Maß für den Gehalt an Restmonomer verwendet.

Folgende Werte konnten ermittelt werden:

| Polymername | Restmonomer / Relative Höhe zum Polymerpeak | $\overline{M_w}$ / g·mol$^{-1}$ |
|---|---|---|
| Polymer 1 (aus Beispiel 1) | 0,40 | 41.800 |
| Polymer 2 (aus Vergleichsbeispiel 1) | 2,25 | 10.700 |
| Polymer 3 (aus Vergleichsbeispiel 2) | 0,82 | 34.000 |
| Polymer 4 (aus Vergleichsbeispiel 3) | 1,30 | 26.000 |

Die unter Vormischung der Monomere hergestellten Polymere 2, 3 und 4 zeigen deutlich höhere Gehalte an nicht zum Polymer umgesetztes Makromonomer /Polyethylenglycol (PEG) haltigen Oligomers als Polymer 1, das mittels erfindungsgemäßer Dosierung der Komponenten in den Reaktor hergestellt wurde. Eine Vormischung der Komponenten resultiert also deutlich in einem höheren Hydrolysegrad und somit in einer Umsatzreduzierung.

Anwendungstests

Die Polymere 1 bis 4 werden auf ihre Eigenschaften als Betonverflüssiger in einem geeigneten Testsystem untersucht. Hierzu werden zuvor alle Polymere mit einer Lösung von NaOH in Wasser (20 Gew.-%) auf einen pH-Wert von 6,5 ± 0,2 eingestellt und mit geringen Mengen eines konventionellen Entschäumers zur Steuerung des Luftporengehalts versetzt.

Bei der Durchführung der Tests werden zunächst 6,00 kg eines Zements CEM I 52,5 R; 9,41 kg Quarzsand und 19,17 kg Zuschläge 30 Sekunden lang trocken gemischt; 1,05 kg Wasser zugegeben und weitere 90 Sekunden gemischt. Anschließend werden erneut 1,05 kg Wasser und jeweils $8{,}40 \cdot 10^{-3}$ kg Polymer (basierend auf dem Polymerfeststoffgehalt) zugegeben und weitere 90 Sekunden gemischt (entspricht einem Wasser/Zementverhältnis von 0,35 und einer Polymerdosierung von 0,14 % Feststoff bezogen auf die Zementeinwaage). Anschließend wird das Ausbreitmaß gemäß DIN EN 12350-5 direkt nach der Herstellung sowie nach 10 und 30 Minuten bestimmt. Folgende Werte wurden ermittelt:

| Polymer | Ausbreitmaß / cm | | | Bemerkung |
|---|---|---|---|---|
| | nach Herstellung | 10 Minuten | 30 Minuten | |
| Polymer 1 | 48,5 | 39 | 33,5 | |
| Polymer 2 | 37 | 34 | - | bei 30 Minuten nicht mehr verarbeitbar |
| Polymer 3 | 37,5 | 31 | - | |
| Polymer 4 | 33,5 | 33 | - | |

Das erfindungsgemäß hergestellte Polymer 1 zeigt bei gleicher Dosierung eine deutlich bessere Verflüssigungswirkung direkt nach Herstellung des Betons als die unter Vormischung hergestellten Polymere 2, 3 und 4. Weiterhin weist es eine deutlich bessere Konsistenzhaltung auf. Beton, der unter Verwendung der Polymere 2, 3 und 4 hergestellt wurde, ist nach 30 Minuten nicht mehr verarbeitbar. Somit führt die erfindungsgemäße Herstellung der Polymere zu Polymeren mit deutlich besseren Anwendungseigenschaften.

**Patentansprüche**

**1.** Verfahren zur Herstellung eines Copolymers in kontinuierlicher Betriebsweise in einer Polymerisationseinrichtung, enthaltend einen Zuführungsleitungen sowie einen Abfluss aufweisenden Polymerisationsreaktor, wobei durch die Zuführungsleitungen radikalischer Polymerisationsinitiator sowie Säuremonomer und Polyethermakromonomer als monomere Ausgangsstoffe in den Polymerisationsreaktor eingeleitet werden, in dem Polymerisationsreaktor auf -20 bis +120 ˚C temperierte Initiator, monomere Ausgangsstoffe, sowie Copolymer enthaltende Reaktionskomposition vorliegt, Copolymer enthaltende Reaktionskomposition durch den Abfluss aus dem Polymerisationsreaktor ausgeleitet wird, wobei die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät.

**2.** Verfahren nach Anspruch 1, **dadurch gekennzeichnet, dass** das Säuremonomer durch Polymerisation umgesetzt und **dadurch** eine Struktureinheit im Copolymer erzeugt wird, die gemäß einer der allgemeinen Formeln (Ia), (Ib), (Ic) und/oder (Id) ist

(Ia)

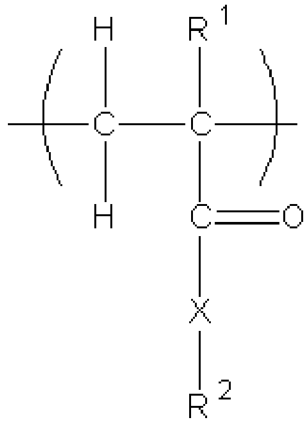

mit
$R^1$ gleich oder verschieden sowie repräsentiert durch H und/oder eine unverzweigte oder verzweigte $C_1$ - $C_4$ Alkylgruppe;
X gleich oder verschieden sowie repräsentiert durch NH-($C_nH_{2n}$) mit n = 1, 2, 3 oder 4 und/oder O-($C_nH_{2n}$) mit n = 1, 2, 3 oder 4 und/oder durch eine nicht vorhandene Einheit;
$R^2$ gleich oder verschieden sowie repräsentiert durch OH, $SO_3H$, $PO_3H_2$, O-$PO_3H_2$ und/oder para substituiertes $C_6H_4$-$SO_3H$, mit der Maßgabe, dass falls X eine nicht vorhandene Einheit ist, $R^2$ durch OH repräsentiert wird;

(Ib)

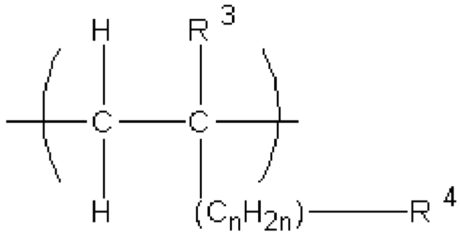

mit
$R^3$ gleich oder verschieden sowie repräsentiert durch H und/oder eine unverzweigte oder verzweigte $C_1$ - $C_4$ Alkylgruppe;

n = 0, 1, 2, 3 oder 4
$R^4$ gleich oder verschieden sowie repräsentiert durch $SO_3H$, $PO_3H_2$, $O\text{-}PO_3H_2$ und/oder para substituiert vorliegendes $C_6H_4\text{-}SO_3H$;

(Ic)

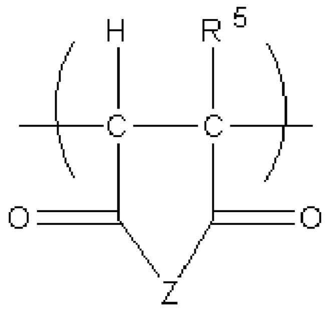

mit
$R^5$ gleich oder verschieden sowie repräsentiert durch H und/oder eine unverzweigte oder verzweigte $C_1$ - $C_4$ Alkylgruppe;
Z gleich oder verschieden sowie repräsentiert durch O und/oder NH;

(Id)

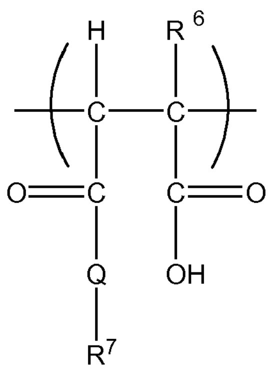

mit
$R^6$ gleich oder verschieden sowie repräsentiert durch H und/oder eine unverzweigte oder verzweigte $C_1$ - $C_4$ Alkylgruppe;
Q gleich oder verschieden sowie repräsentiert durch NH und/oder O;
$R^7$ gleich oder verschieden sowie repräsentiert durch H, $(C_nH_{2n})\text{-}SO_3H$ mit n = 0, 1, 2, 3 oder 4, $(C_nH_{2n})\text{-}OH$ mit n = 0, 1, 2, 3 oder 4; $(C_nH_{2n})\text{-}PO_3H_2$ mit n = 0, 1, 2, 3 oder 4, $(C_nH_{2n})\text{-}OPO_3H_2$ mit n= 0, 1, 2, 3 oder 4, $(C_6H_4)\text{-}SO_3H$, $(C_6H_4)\text{-}PO_3H_2$, $(C_6H_4)\text{-}OPO_3H_2$ und/oder $(C_mH_{2m})_e\text{-}O\text{-}(A'O)_\alpha\text{-}R^9$ mit m = 0, 1, 2, 3 oder 4, e = 0, 1, 2, 3 oder 4, A= $C_{x'}H_{2x'}$ mit x' = 2, 3, 4 oder 5 und/oder $CH_2C(C_6H_5)H\text{-}$, $\alpha$ = eine ganze Zahl von 1 bis 350 mit $R^9$ gleich oder verschieden sowie repräsentiert durch eine unverzweigte oder verzweigte $C_1$ - $C_4$ Alkylgruppe.

3. Verfahren nach Anspruch 1 oder 2, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

4. Verfahren nach einem der Ansprüche 1 bis 3, **dadurch gekennzeichnet, dass** das Polyethermakromonomer durch Polymerisation umgesetzt und **dadurch** eine Struktureinheit im Copolymer erzeugt wird, die gemäß einer der allgemeinen Formeln (IIa), (IIb) und/oder (IIc) ist

(IIa)

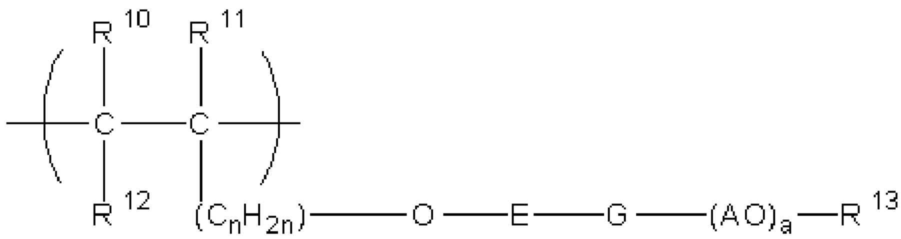

mit

$R^{10}$, $R^{11}$ sowie $R^{12}$ jeweils gleich oder verschieden und unabhängig voneinander repräsentiert durch H und/oder eine unverzweigte oder verzweigte $C_1$ - $C_4$ Alkylgruppe;

E gleich oder verschieden sowie repräsentiert durch eine unverzweigte oder verzweigte $C_1$ - $C_6$ Alkylengruppe, eine Cyclohexylgruppe, $CH_2$-$C_6H_{10}$, ortho, meta oder para substituiert vorliegendes $C_6H_4$ und/oder eine nicht vorhandene Einheit;

G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;

A gleich oder verschieden sowie repräsentiert durch $C_xH_{2x}$ mit x = 2, 3, 4 und/oder 5 (bevorzugt x = 2) und/oder $CH_2CH(C_6H_5)$;

n gleich oder verschieden sowie repräsentiert durch 0, 1, 2, 3, 4 und/oder 5;

a gleich oder verschieden sowie repräsentiert durch eine ganze Zahl von 2 bis 350 (bevorzugt 10 - 200);

$R^{13}$ gleich oder verschieden sowie repräsentiert durch H, eine unverzweigte oder verzweigte $C_1$ - $C_4$ Alkylgruppe, CO-$NH_2$, und/oder $COCH_3$;

(IIb)

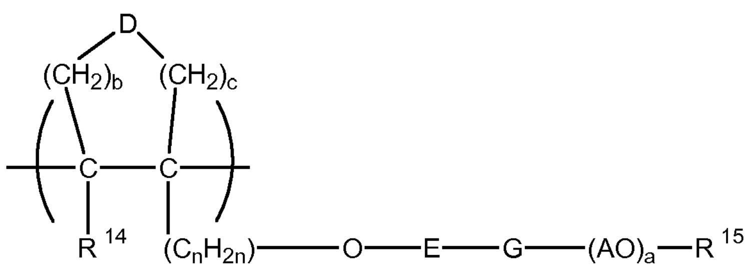

mit

$R^{14}$ gleich oder verschieden sowie repräsentiert durch H und/oder eine unverzweigte oder verzweigte $C_1$ - $C_4$ Alkylgruppe;

E gleich oder verschieden sowie repräsentiert durch eine unverzweigte oder verzweigte $C_1$ - $C_6$ Alkylengruppe, eine Cyclohexylgruppe, $CH_2$-$C_6H_{10}$, ortho, meta oder para substituiert vorliegendes $C_6H_4$ und/oder durch eine nichtvorhandene Einheit;

G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;

A gleich oder verschieden sowie repräsentiert durch $C_xH_{2x}$ mit x = 2, 3, 4 und/oder 5 und/oder $CH_2CH(C_6H_5)$;

n gleich oder verschieden sowie repräsentiert durch 0, 1, 2, 3, 4 und/oder 5

a gleich oder verschieden sowie repräsentiert durch eine ganze Zahl von 2 bis 350;

D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;

$R^{15}$ gleich oder verschieden sowie repräsentiert durch H, eine unverzweigte oder verzweigte $C_1$ - $C_4$ Alkylgruppe, CO-$NH_2$, und/oder $COCH_3$;

(IIc)

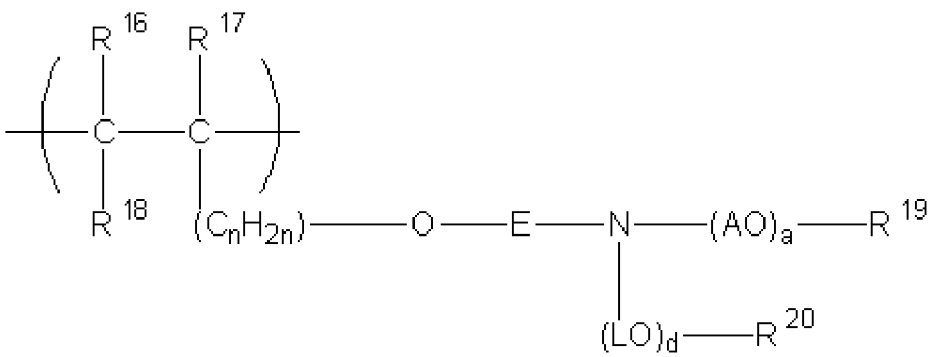

mit
$R^{16}$, $R^{17}$ sowie $R^{18}$ jeweils gleich oder verschieden und unabhängig voneinander repräsentiert durch H und/oder eine unverzweigte oder verzweigte $C_1$ - $C_4$ Alkylgruppe;
E gleich oder verschieden sowie repräsentiert durch eine unverzweigte oder verzweigte $C_1$ - $C_6$ Alkylengruppe, eine Cyclohexylgruppe, $CH_2$-$C_6H_{10}$, ortho, meta oder para substituiert vorliegendes $C_6H_4$ und/oder durch eine nicht vorhandene Einheit;
A gleich oder verschieden sowie repräsentiert durch $C_xH_{2x}$ mit x = 2, 3, 4 und/oder 5 und/oder $CH_2CH(C_6H_5)$;
n gleich oder verschieden sowie repräsentiert durch 0, 1, 2, 3, 4 und/oder 5;
L gleich oder verschieden sowie repräsentiert durch $C_xH_{2x}$ mit x = 2, 3, 4 und/oder 5 und/oder $CH_2$-$CH(C_6$-$H_5)$;
a gleich oder verschieden sowie repräsentiert durch eine ganze Zahl von 2 bis 350;
d gleich oder verschieden sowie repräsentiert durch eine ganze Zahl von 1 bis 350;
$R^{19}$ gleich oder verschieden sowie repräsentiert durch H und/oder eine unverzweigte oder verzweigte $C_1$ - $C_4$ Alkylgruppe,
$R^{20}$ gleich oder verschieden sowie repräsentiert durch H und/oder eine unverzweigte $C_1$ - $C_4$ Alkylgruppe.

5. Verfahren nach einem der Ansprüche 1 bis 4, **dadurch gekennzeichnet, dass** als Polyethermakromonomer alkoxyliertes Isoprenol und/oder alkoxylierter Hydroxybutylvinylether und/oder alkoxylierter (Meth)allylalkohol mit bevorzugt jeweils einer arithmetisch mittleren Zahl an Oxyalkylengruppen von 4 bis 400 eingesetzt wird.

6. Verfahren nach einem der Ansprüche 1 bis 5, **dadurch gekennzeichnet, dass** als monomerer Ausgangsstoff eine vinylisch ungesättigte Verbindung in den Polymerisationsreaktor eingeleitet wird, welche durch Polymerisation umgesetzt wird und **dadurch** eine Struktureinheit im Copolymer erzeugt wird, die gemäß der allgemeinen Formeln (IIIa) und/oder (IIIb) vorliegt

(IIIa)

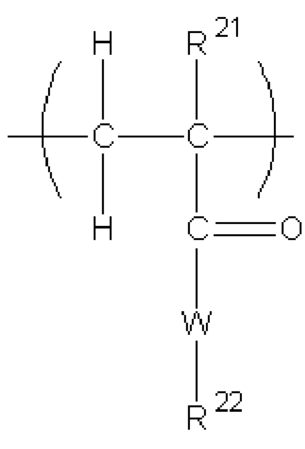

mit
mit $R^{21}$ gleich oder verschieden sowie repräsentiert durch H und/oder eine unverzweigte oder verzweigte $C_1$ - $C_4$ Gruppe;
W gleich oder verschieden sowie repräsentiert durch O und/oder NH;
$R^{22}$ gleich oder verschieden sowie repräsentiert durch eine verzweigte oder unverzweigte $C_1$ - $C_5$-Monohydoxyalkylgruppe;

(IIIb)

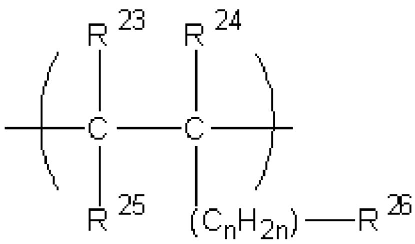

mit
$R^{23}$, $R^{24}$ und $R^2$ jeweils gleich oder verschieden sowie jeweils unabhängig repräsentiert durch H und/oder eine unverzweigte oder verzweigte $C_1$ - $C_4$ Alkylgruppe;
n gleich oder verschieden sowie repräsentiert durch 0, 1, 2, 3 und/oder 4;
$R^{26}$ gleich oder verschieden sowie repräsentiert durch $(C_6H_5)$, OH und/oder $-COCH_3$.

**7.** Verfahren nach einem der Ansprüche 1 bis 6, **dadurch gekennzeichnet, dass** als radikalische Polymerisationsinitiator ein Redoxinitiator eingesetzt wird.

**8.** Verfahren nach Anspruch 7, **dadurch gekennzeichnet, dass** als Redoxinitiator das System $H_2O_2/FeSO_4$ gewählt wird, welches zusammen mit einem Reduktionsmittel eingesetzt wird.

**9.** Verfahren nach Anspruch 8, **dadurch gekennzeichnet, dass** als Reduktionsmittel Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon, eingesetzt werden.

**10.** Verfahren nach einem der Ansprüche 1 bis 9, **dadurch gekennzeichnet, dass** soviel Polyethermakromonomer pro Mol Säuremonomer in den Polymerisationsreaktor eingeleitet wird, dass sich im gebildeten Copolymer ein arithmetisch mittleres molares Verhältnis von Säuremonomerstruktureinheiten zu Polyethermakromonomerstruktureinheiten von 20:1 bis 1:1, bevorzugt von 12:1 bis 1:1 einstellt.

**11.** Verfahren nach einem der Ansprüche 1 bis 10, **dadurch gekennzeichnet, dass** insgesamt mindestens 45 Mol %, bevorzugt jedoch mindestens 80 Mol % aller Struktureinheiten des Copolymers durch Polymerisation von Säuremonomer und Polyethermakromonomer erzeugt werden.

**12.** Verfahren nach einem der Ansprüche 1 bis 11, **dadurch gekennzeichnet, dass** ein Kettenregler, welcher bevorzugt in gelöster Form vorliegt, in den Polymerisationsreaktor eingeleitet wird.

**13.** Verfahren nach einem der Ansprüche 1 bis 12, **dadurch gekennzeichnet, dass** die monomeren Ausgangsstoffe und/oder der Initiator in Form ihrer wässrigen Lösungen in den Polymerisationsreaktor eingeleitet werden.

**14.** Verfahren nach einem der Ansprüche 1 bis 13, **dadurch gekennzeichnet, dass** der Polymerisationsreaktor als kontinuierlich betriebener Rührkessel vorliegt.

**15.** Verfahren nach einem der Ansprüche 1 bis 14, **dadurch gekennzeichnet, dass** die Polymerisationseinrichtung noch mindestens einen dem Polymerisationsreaktor nachgeschalteten, kontinuierlich betriebenen Reaktor aufweist, in welchem über den Abfluss des Polymerisationsreaktors die Copolymer enthaltende Reaktionskomposition eingeleitet wird.

16. Verfahren nach Anspruch 15, **dadurch gekennzeichnet, dass** in den nachgeschalteten Reaktor monomere Ausgangsstoffe und/oder Initiatorkomponenten eingeleitet werden.

17. Copolymer herstellbar gemäß einem Verfahren nach einem der Ansprüche 1 bis 16.

18. Verwendung eines Copolymers gemäß Anspruch 17 als Dispergiermittel für hydraulische Bindemittel.

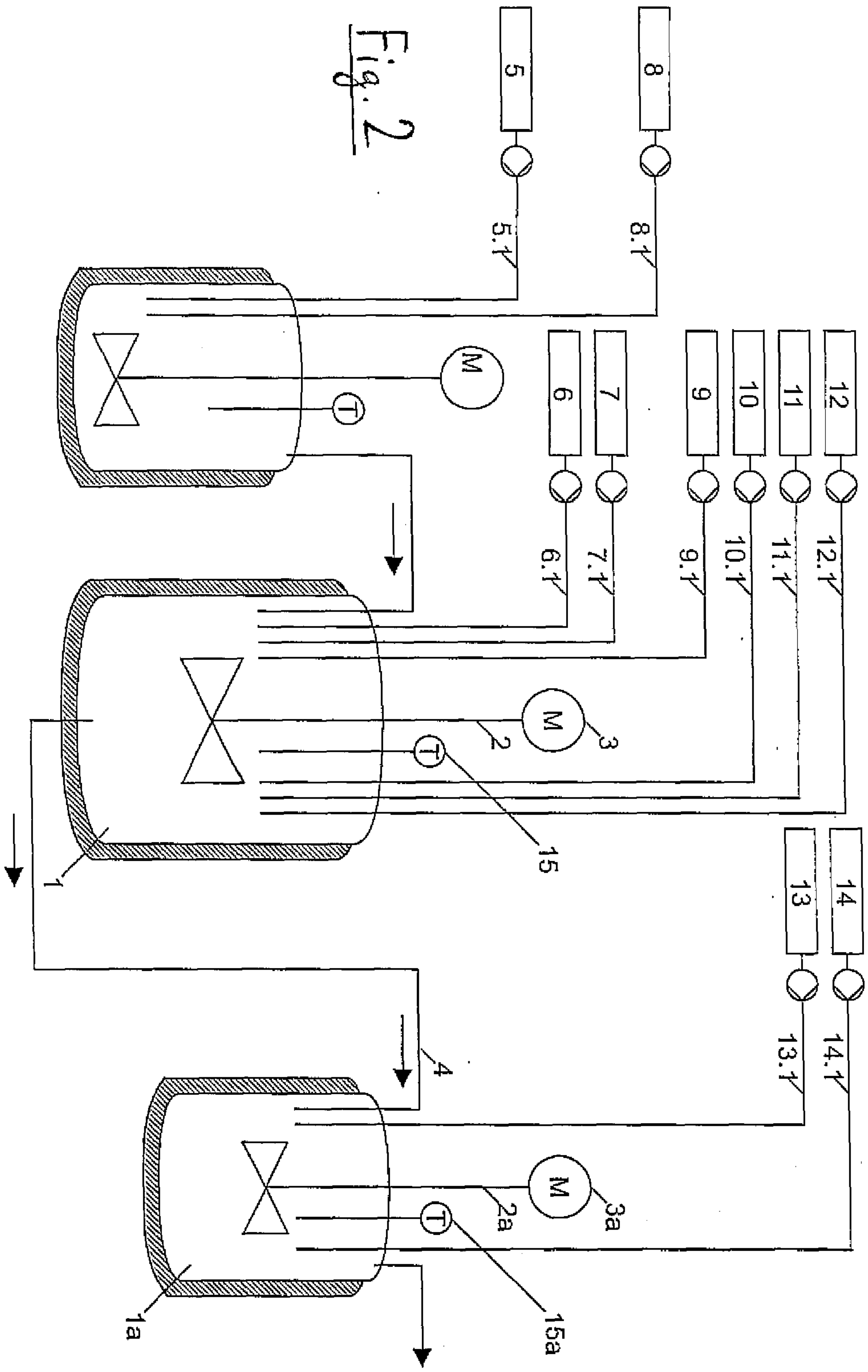
5
8
5.1
8.1
M
T
6
7
9
10
11
12
6.1
7.1
9.1
10.1
11.1
12.1
2
3
15
1
13
14
13.1
14.1
4
2a
3a
15a
1a

Fig. 2

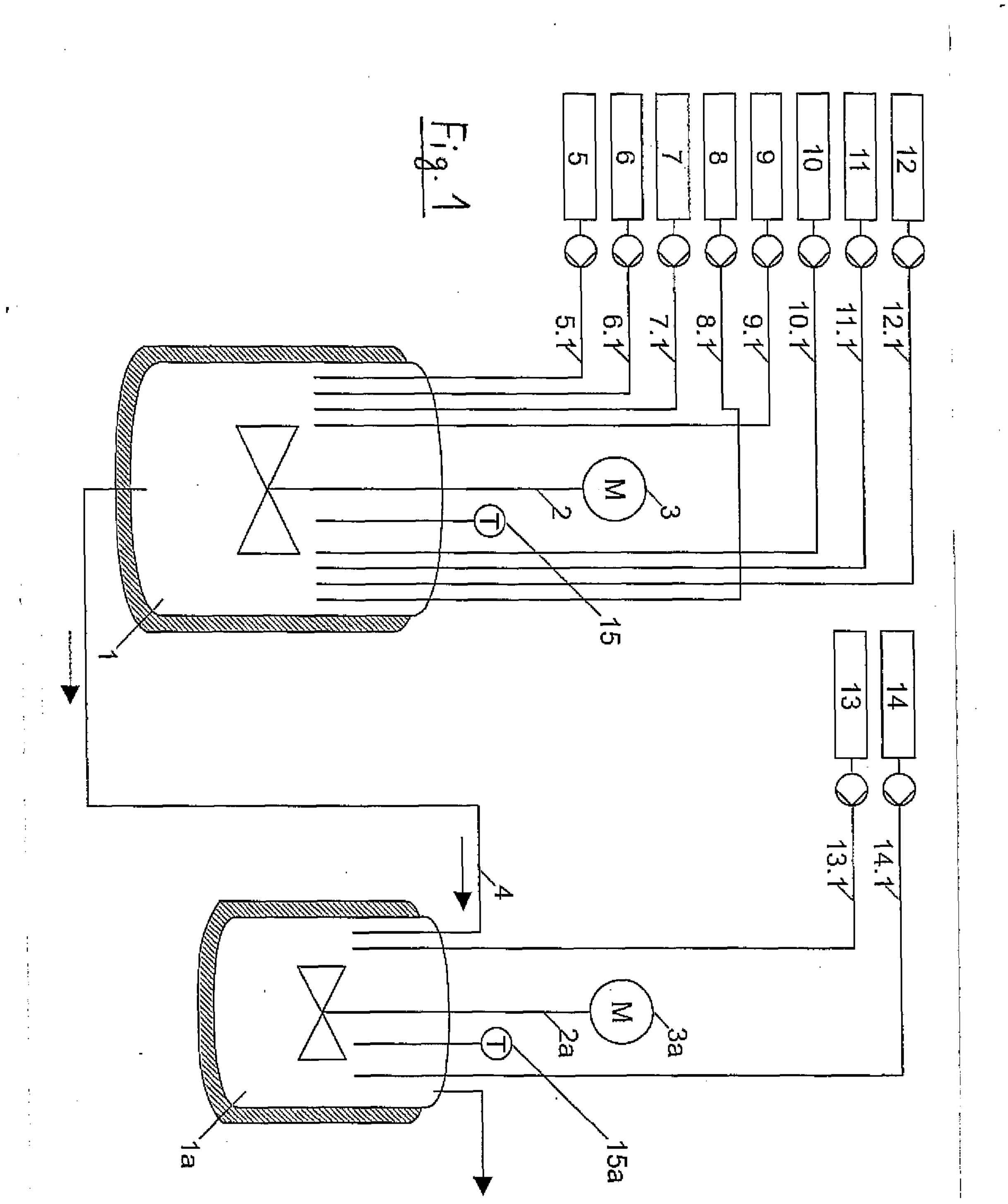
5
6
7
8
9
10
11
12
5.1
6.1
7.1
8.1
9.1
10.1
11.1
12.1
M
3
2
T
15
1
4
13
14
13.1
14.1
M
3a
2a
T
15a
1a

Fig. 1

Europäisches Patentamt

# EUROPÄISCHER RECHERCHENBERICHT

Nummer der Anmeldung
EP 08 10 1598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br><br><br><br><br><br><br><br><br>Y | EP 1 690 877 A (NIPPON CATALYTIC CHEM IND [JP]) 16. August 2006 (2006-08-16)<br>* Absatz [0048]; Beispiel 1 *<br>* Absätze [0037] - [0043] *<br>* Absätze [0029] - [0036] *<br>* Absatz [0044] *<br>* Absätze [0053] - [0057] *<br>* Absätze [0060], [0061] *<br>* Absatz [0050] *<br>* Absätze [0001], [0002], [0115], [0116]; Beispiel 4 *<br>* Absatz [0048]; Beispiel 1 *<br>----- | 1-18<br><br><br><br><br><br><br><br><br><br><br>1-18 | INV.<br>C04B24/26<br>C08F220/06<br>C08F216/12<br>C08F220/08<br>C08F220/64<br>C08F220/66<br>C08F222/02<br>C08F222/04<br>C08F222/06<br>C08F222/16<br>C08F290/06<br>C08L33/02 |
| Y | WO 2004/094336 A (ARCO CHEM TECH [US]; SCHWARTZ STEVEN A [US]; LIOTTA FRANK J JR [US]) 4. November 2004 (2004-11-04)<br>* Seite 14, Zeilen 4-12 *<br>* Seite 10, Zeile 29 - Seite 12, Zeile 19 *<br>* Seite 13, Zeile 5 - Seite 14, Zeile 24 *<br>* Beispiele 1-4 *<br>* Seite 1, Zeilen 7-27 *<br>* Seite 4, Zeilen 15-31 *<br>----- | 1-18 | RECHERCHIERTE SACHGEBIETE (IPC)<br>C04B<br>C08F<br>C08L |
| Y | WO 2005/019288 A (CONSTR RES & TECH GMBH [DE]; KRAUS ALEXANDER [DE]; ALBRECHT GERHARD [D) 3. März 2005 (2005-03-03)<br>Variante 2<br>* das ganze Dokument *<br>----- | 1-18 | |
| Y | WO 01/07494 A (ARCO CHEM TECH [US]) 1. Februar 2001 (2001-02-01)<br>* das ganze Dokument *<br>----- | 1-18 | |
| A | WO 2004/087602 A (CONSTR RES & TECH GMBH [DE]; MATSUMOTO TOSHIMI [JP]; ASMUS SVEN [JP];) 14. Oktober 2004 (2004-10-14)<br>* das ganze Dokument *<br>-----<br>-/-- | 1-18 | |

Der vorliegende Recherchenbericht wurde für alle Patentansprüche erstellt

| Recherchenort | Abschlußdatum der Recherche | Prüfer |
|---|---|---|
| Den Haag | 11. Juni 2008 | Dalet, Pierre |

4

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 08 10 1598

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | EP 1 528 071 A (NIPPON CATALYTIC CHEM IND [JP]) 4. Mai 2005 (2005-05-04)<br>* das ganze Dokument *<br>----- | 1-18 | |
| | | | RECHERCHIERTE SACHGEBIETE (IPC) |

Der vorliegende Recherchenbericht wurde für alle Patentansprüche erstellt

4

| Recherchenort | Abschlußdatum der Recherche | Prüfer |
|---|---|---|
| Den Haag | 11. Juni 2008 | Dalet, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 08 10 1598

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2008

| Im Recherchenbericht angeführtes Patentdokument | Datum der Veröffentlichung | Mitglied(er) der Patentfamilie | Datum der Veröffentlichung |
|---|---|---|---|
| EP 1690877 A | 16-08-2006 | JP 2006248889 A | 21-09-2006 |
| | | KR 20060091252 A | 18-08-2006 |
| | | US 2006183820 A1 | 17-08-2006 |
| WO 2004094336 A | 04-11-2004 | CA 2518704 A1 | 04-11-2004 |
| | | EP 1615860 A2 | 18-01-2006 |
| | | US 2004209979 A1 | 21-10-2004 |
| WO 2005019288 A | 03-03-2005 | AT 368693 T | 15-08-2007 |
| | | CA 2535961 A1 | 03-03-2005 |
| | | CN 1860144 A | 08-11-2006 |
| | | DE 10337975 A1 | 07-04-2005 |
| | | EP 1656404 A1 | 17-05-2006 |
| | | ES 2287760 T3 | 16-12-2007 |
| | | JP 2007502767 T | 15-02-2007 |
| | | US 2007043190 A1 | 22-02-2007 |
| WO 0107494 A | 01-02-2001 | AT 306504 T | 15-10-2005 |
| | | AU 6079700 A | 13-02-2001 |
| | | CA 2377463 A1 | 01-02-2001 |
| | | CN 1374975 A | 16-10-2002 |
| | | DE 60023160 T2 | 14-06-2006 |
| | | EP 1218427 A1 | 03-07-2002 |
| | | ES 2246872 T3 | 01-03-2006 |
| | | JP 2003505560 T | 12-02-2003 |
| | | MX PA02000745 A | 20-08-2002 |
| | | US 6214958 B1 | 10-04-2001 |
| | | US 2001001797 A1 | 24-05-2001 |
| WO 2004087602 A | 14-10-2004 | BR PI0408974 A | 04-04-2006 |
| | | CA 2521173 A1 | 14-10-2004 |
| | | EP 1608601 A1 | 28-12-2005 |
| | | JP 2004307590 A | 04-11-2004 |
| | | MX PA05010638 A | 15-12-2005 |
| | | US 2006247402 A1 | 02-11-2006 |
| EP 1528071 A | 04-05-2005 | CN 1624018 A | 08-06-2005 |
| | | KR 20050040785 A | 03-05-2005 |
| | | US 2005113541 A1 | 26-05-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1218427 B